(19) Europäisches Patentamt
European Patent Office
Office européen des brevets

(11) **EP 3 234 723 B1**

(12) **EUROPEAN PATENT SPECIFICATION**

(45) Date of publication and mention
of the grant of the patent:
**23.03.2022 Bulletin 2022/12**

(21) Application number: **15870863.6**

(22) Date of filing: **15.12.2015**

(51) International Patent Classification (IPC):
*G05D 7/06* (2006.01)   *G01F 25/00* (2022.01)
*G01F 15/00* (2006.01)   *G01F 1/36* (2006.01)
*F04B 53/10* (2006.01)   *F04B 1/00* (2020.01)

(52) Cooperative Patent Classification (CPC):
**G01F 1/36; F04B 1/00; F04B 53/10; G01F 15/005;
G01F 25/10;** F04B 2205/09

(86) International application number:
**PCT/US2015/065789**

(87) International publication number:
**WO 2016/100322 (23.06.2016 Gazette 2016/25)**

(54) **A DISCRETE VALVE FLOW RATE CONVERTER**

DISKRETER VENTILSTRÖMUNGSRATENWANDLER

CONVERTISSEUR DE DÉBIT DE VANNE DISCRET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2014 US 201462091965 P**

(43) Date of publication of application:
**25.10.2017 Bulletin 2017/43**

(73) Proprietor: **Fluid Handling LLC.
Morton Grove, IL 60053 (US)**

(72) Inventors:
• **CHENG, Andrew A.
Wilmette, IL 60091 (US)**
• **GU, James J.
Buffalo Grove, IL 60089 (US)**

(74) Representative: **DREISS Patentanwälte PartG
mbB
Friedrichstraße 6
70174 Stuttgart (DE)**

(56) References cited:
EP-A1- 0 540 079       EP-A1- 2 623 823
EP-A2- 0 061 856       WO-A1-02/25391
WO-A1-2011/104419      US-A- 4 277 832
US-A1- 2005 060 108    US-A1- 2011 313 517
US-A1- 2013 008 264    US-A1- 2013 240 045
US-A1- 2014 288 716    US-A1- 2014 288 716

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

CROSS REFERENCE TO RELATED APPLICATION

This application claims benefit to U.S. provisional application no. 62/091,965 (Atty Dckt No. 911-019.017-1//F-B&G-X0015US), filed 15 December 2014, entitled "Discrete valves flow rate converter".

This application is also related to a family of technologies developed by one or more of the inventors herein, and disclosed in the following applications:

> [1] U.S. application serial no. 12/982,286 (Atty Dckt No. 911-019.001 - 1//F-B&G-1001), filed 30 December 2010, entitled "Method and apparatus for pump control using varying equivalent system characteristic curve, AKA an adaptive control curve," which issued as U.S. Patent No. 8,700,221 on 15 April 2014; and
> [2] U.S. application serial no. 13/717,086 (Atty Dckt No. 911-019.004-2//F-B&G-X0001), filed 17 December 2012, entitled "Dynamic linear control methods and apparatus for variable speed pump control," which claims benefit to U.S. provisional application no. 61/576,737, filed 16 December 2011, now abandoned;
> which are all assigned to the assignee of the instant patent application.

The present invention builds on the family of technologies disclosed in the aforementioned related applications, as well as the other patent applications identified below.

BACKGROUND OF THE INVENTION

1. Field of the Invention

The present invention relates to a technique for determining a flow rate of a valve; and more particularly, the present invention relates to a method and apparatus for determining the flow rate of a valve, e.g., in a dynamic hydronic pumping system.

Examples related to the field of the invention with a system to control a flow control valve or a fluid mass flow controller are respectively found in European Patent Application EP 0 540 079 A1 or in United States Patent Application US 4 277 832 A.

2. Brief Description of Related Art

The aforementioned patent applications set forth above in [1] and [2] disclose adaptive pressure control techniques to save pump operation energy, in which the system flow rate besides of the system pressure is needed to obtain the hydronic system characteristics curves in the adaptive control. To be able to apply in a hydronic control system where there is no flow meter installed, the aforementioned patent applications set forth above in [3] and [4] disclose sensorless pump flow and pressure converters as well, which may be used to provide the instant system flow as well as pressure for the adaptive controls. Since there are always some pressure control hydronic cooling or heating systems equipped with a control valve as well as a differential pressure sensor for pressure and flow control, one may use them directly to obtain the system flow rate without a need of a flow meter or pump sensorless flow and pressure converters.

SUMMARY OF THE INVENTION

In summary, the present invention takes the form of a discrete valve flow rate converter that provides a system flow rate through a valve at any open position, based on the valve's differential pressure and the valve's hydronic characteristics calibration data. The discrete valve flow rate converter may be applied to many different kinds of valves.

By way of example, the present invention provides a new and unique technique for determining a flow rate of a valve. According to some embodiments, the present invention includes apparatus for determining the flow rate of a valve, e.g., in a dynamic hydronic pumping system, as disclosed in claim 1.

According to some embodiments, the present invention may include one or more of the following features:

The signal processor or processing module may be configured to provide corresponding signaling containing information about the discrete valve flow rate determined, including where the corresponding signaling is provided to control the valve, e.g., including the opening or closing of the valve.

The corresponding signaling may be used as control signaling in a pumping hydronic control system in a dynamic hydronic pumping system.

The signal processor or processing module is configured in, or forms part of, a 3-dimensional (3D) discrete valve flow rate converter that responds to associated signaling containing information about both a sensed differential pressure dP across the valve and a given valve open position d of the valve, and provides the discrete valve flow rate Q by utilizing the discrete distribution function to reconstruct the discrete value flow rate Q in terms of the differential pressure dP and the given valve open position d, based upon the system characteristic calibration data and numerical interpolations using the Equation:

$$g(Q,\ dP,\ d) = 0,$$

where g is the discrete distribution function of the discrete valve flow rate, Q, with respect to the differential pressure dP across the valve with the given open position d.

The apparatus may include a differential pressure sensor configured across the valve, where the signaling contains information about the differential pressure provided or generated from or by the differential pressure sensor.

The apparatus may include, or form part of, a valve flow rate measurement system.

The apparatus may include a mobile CPU device having a discrete flow rate converter configured therein to provide the discrete value flow rate at the given open position, based upon the differential pressure measured by the differential pressure sensor across the valve.

The discrete valve flow rate converter may be configured to utilize the discrete distribution function to reconstruct the discrete value flow rate in terms of the differential pressure and the given open position, based upon the system characteristic calibration data and numerical interpolations using the aforementioned Equation:

$$g(Q, dP, d) = 0.$$

The discrete flow rate converter may include a memory device configured to store the system characteristic calibration data for the valve to be monitored that is previously obtained.

The signal processor or processing module may be configured to remap or reconstruct the discrete valve flow rate Q, e.g., using the numerical interpolations by implementing a 3D numerical remapping algorithm, which may include, or take the form of, 2D interpolation or 2D Splines.

The apparatus may include an automatic control valve in which the given valve open position d can be controlled automatically, including where the signal processor or processing module is configured to provide automatic valve control signaling to control the given valve open position d.

According to some embodiments, the present invention takes also the form of a method as disclosed in claim 11.

The method may also include one or more of the features set forth herein, including providing from the signal processor or processing module corresponding signaling containing information about the discrete valve flow rate, e.g., which may be used to control the valve in the a dynamic hydronic pumping system.

The instant application provides a new technique that is a further development of, and builds upon, the aforementioned family of technologies set forth herein.

BRIEF DESCRIPTION OF THE DRAWING

The drawing includes the following Figures, which are not necessarily drawn to scale:

Figure 1 is a schematic diagram of a valve flow rate measurement system having a 3D valve flow rate converter, according to some embodiments of the present invention.

Figure 2 is a schematic diagram of a 3D valve flow rate converter, according to some embodiments of the present invention.

Figure 3 is a graph of flow (GPM) in relation to valve openings (%) and pressure (Ft) showing a distribution of valve system characteristic, according to implementations of some embodiments of the present invention.

Figure 4 includes Figs. 4A through 4D showing plots of comparisons of testing data or results using a discrete valve flow rate converter according to the present invention (see readings identified by square symbols) and a corresponding flow meter (see readings identified by circular symbols) on a circuit setter respectively, e.g., where Fig. 4A shows test results for a valve having a 40% opening, Fig. 4B shows test results for a valve having a 60% opening, Fig. 4C shows test results for a valve having an 80% opening, and Fig. 4D shows test results for a valve having a 100% opening.

Figure 5 is a block diagram of apparatus, e.g., having a signal processor or processing module configured for implementing the signal processing functionality, according to some embodiments of the present invention.

DETAILED DESCRIPTION OF THE INVENTION

Figures 1-4:

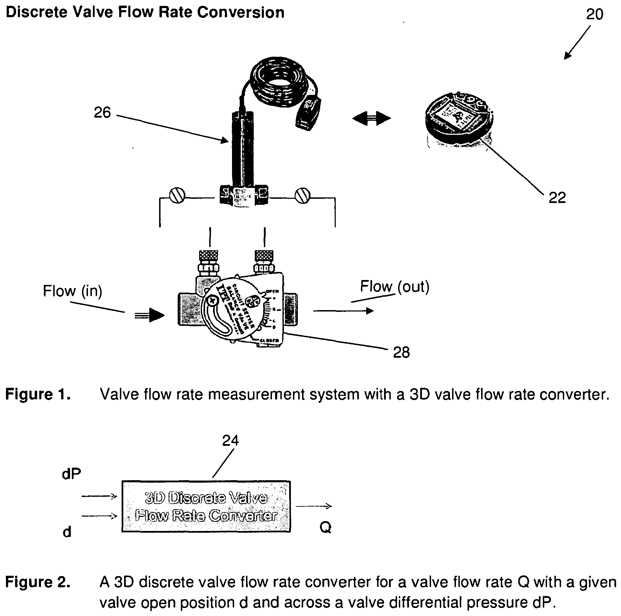

Figure 1 shows a hydronic valve flow rate measurement system generally indicated as 20 that consists of a mobile CPU device 22 with a discrete valve flow converter 24 (Figure 2) and a differential pressure sensor or meter 26 arranged in relation to a valve 28. Figure 2 shows the discrete valve flow converter 24 configured to provide a valve system flow rate Q at a given valve open position d, based upon signalling received containing information about the differential pressure dP measured by the differential pressure sensor or meter 26 configured or arranged across the valve 28 and the given valve open position d.

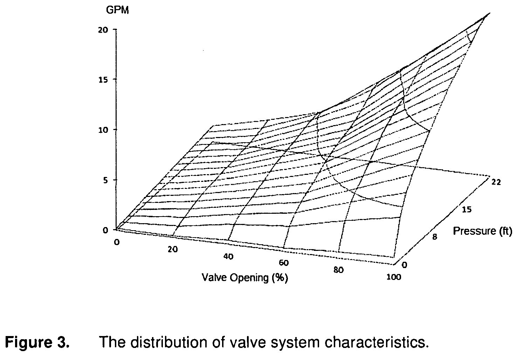

By way of example, Figure 3 shows a 3D plot of a distribution of valve hydronic characteristics, e.g., which include the valve flow rate (l/s: liter per second in SI units or GPM: Gallons per Minute, with indicative conversion factor 1 GPM = 0.063 l/s) with respect to the differential pressure (Pa: pascal in SI units or feet of head: ft, with indicative conversion factor 1 ft = 2988.3 Pa) associated with valve openings (%).

The discrete valve flow converter 24 may be configured to use a discrete distribution function to reconstruct the valve system flow rate of the valve 28 in relation to its differential pressure and open position, e.g.,

based on the system characteristics calibration data and numerical interpolations represented by Equation (1), as follows:

$$g(Q, dP, d) = 0, \qquad (1)$$

where g is a distribution function of the valve flow rate $Q$ with respect to the differential pressure $dP$ across the valve 28 having a given opening position $d$. The valve flow function reconstructed in Eq. (1) may be used to obtain any instantaneous valve system flow rate at the differential pressure measured and known and at a given valve open position respectively.

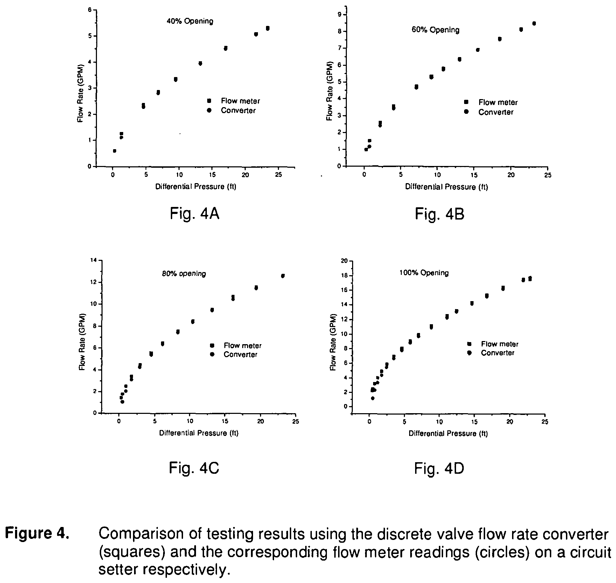

Figure 4 shows plots of some testing data or results on such a valve flow rate converter like 24 on a circuit setter, e.g., for openings of 40% (Fig. 4A), 60% (Fig. 4B), 80% (Fig. 4C), and 100% (Fig. 4D). Figure 4A through 4D each include two plots, one plot showing a flow rate measured by a flow meter (not shown herein) represented or indicated by a series of square symbols, and another plot showing a flow rate determined by the discrete valve flow rate converter represented or indicated by a series of circular symbols. (As shown, at higher differential pressures and flow rates, the series of square symbols and the series of circular symbols tend to merge together or overlap, indicating that the flow rate measured by the flow meter and the flow rate determined by the discrete valve flow rate converter according to the present invention are very similar and in many cases substantially the same.)

By way of example, in order to use the discrete valve flow rate converter 24 (Figure 2), the calibration data or discrete valve system characteristics for the valve 28 to be monitored would typically first need to be obtained. As a person skilled in the art would appreciate, the higher the positioning accuracy of valves, such as some control valves and circuit setters, the higher accurate calibration data that may be obtained, and the higher the system flow rate conversion accuracy that may be achieved consequently. Although the discrete valve flow rate converter set forth herein may be applied to all kinds of valves as long as the open position of the valve and the differential pressure across the valve can be obtained, it may be preferably implemented in the control valve applications, e.g., where the valve's open position can be controlled automatically and accurately so that the valve system flow rate may be monitored continuously and correspondingly. Furthermore, the system flow rate converted by the converter according to the present invention may be used in relation to other pumping controls, such as pump adaptive pressure controls (see [1-2] above).

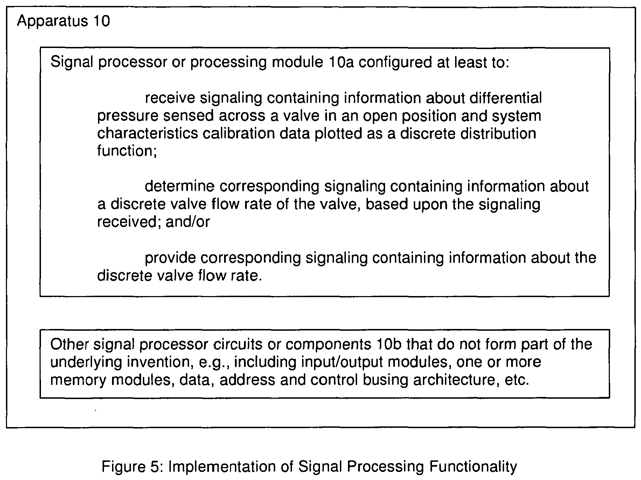

Figure 5: Implementation of Signal Processing Functionality

By way of example, Figure 5 shows apparatus 10 according to some embodiments of the present invention, e.g., featuring a signal processor or processing module 10a configured at least to:

receive signaling containing information about a differential pressure sensed across a valve in an open position and system characteristics calibration data plotted as a discrete distribution function; and determine corresponding signaling containing information about a discrete valve flow rate of the valve, based upon the signaling received.

In operation, the signal processor or processing module may be configured to provide corresponding signaling containing information about the discrete valve flow rate of the valve. The corresponding signaling may contain information used to control a pumping hydronic system.

By way of example, the signal processing functionality may be implemented in the 3D discrete valve flow rate converter 24 (Figure 2), which may form part of the mobile CPU device 22 (Figure 1).

The signal processor or processing module 10a may be configured in, or form part of, a pump and/or valve control panel, e.g., which may include or be implemented in conjunction with a valve control or controller configured therein.

As a person skilled in the art would appreciate and understand, the present invention may be implemented using valve system characteristics and associated equations, e.g., consistent with that set forth herein, as well as by using other types or kinds of valve system characteristics and associated equations that are either now known or later developed in the future.

By way of example, the functionality of the apparatus 10 may be implemented using hardware, software, firmware, or a combination thereof. In a typical software implementation, the apparatus 10 would include one or more microprocessor-based architectures having, e.g., at least one signal processor or microprocessor like element 10a. A person skilled in the art would be able to program with suitable program code such a microcontroller-based, or microprocessor-based, implementation to perform the functionality described herein without undue experimentation. For example, the signal processor or processing module 10a may be configured, e.g., by a person skilled in the art without undue experimentation, to receive the signaling containing information about the differential pressure sensed across the valve in the open position and system characteristics calibration data plotted as the discrete distribution function, consistent with that disclosed herein.

Moreover, the signal processor or processing module 10a may be configured, e.g., by a person skilled in the art without undue experimentation, to determine the corresponding signaling containing information about the discrete valve flow rate of valve, based upon the signaling received, consistent with that disclosed herein.

The scope of the invention is defined by the claims.

The apparatus 10 may also include, e.g., other signal processor circuits or components 10b, including random access memory or memory module (RAM) and/or read only memory (ROM), input/output devices and control, and data and address buses connecting the same, and/or at least one input processor and at least one output processor, e.g., which would be appreciate by a person skilled in the art.

The Equations and Discrete Distribution Functions

The aforementioned equations and discrete distribution function ($g(Q,dP,d) = 0$) for implementing the present invention are known in the art, and provided by way of example.

Moreover, the scope of the invention is defined by the claims.

The Differential Pressure Sensor or Meter 26 Differential pressure sensors or meters like element 26 are known in the art, and the scope of the invention is defined by the claims.

The Valve 28

Valves like element 28 are known in the art, and the scope of the invention is defined by the claims.

Moreover, techniques for determining a given valve opening position like parameter d for a valve like element 28, as well as techniques for provisioning suitable signaling containing information about the given valve opening position d, are also known in the art; and the scope of the invention is defined by the claims.

Valve Hydronic Characteristics and Discrete Distribution Functions

Techniques for determining a valve's hydronic characteristics, and techniques for plotting distributions of such valve hydronic characteristics, e.g., like that shown in Figure 3, are also known in the art; and the scope of the invention is defined by the claims.

Moreover, a person skilled in the art would be able to implement the underlying invention without undue experimentation based upon that disclosed herein, including determining a valve's hydronic characteristics, and plotting distributions of such valve hydronic characteristics like that shown in Figure 3.

The Discrete System Characteristic Calibration Data

As a person skilled in the art would appreciate, discrete system characteristic calibration data of the flow rate Q is understood to be either measured data from a lab or from a valve's production line. The discrete system characteristic calibration data may then be coded into a control program to reconstruct the discrete distribution function of flow rate Q by using a numerical interpolation algorithm.

Numerical Interpolation Algorithm

Numerical interpolation algorithm are known in the art, and the scope of the invention is defined by the claims.

Other Related Applications

In addition to applications [1] and [2] set forth above, this application is also related to other patent applications that form part of the overall family of technologies developed by one or more of the inventors herein, and disclosed in the following applications:

[3] U.S. application serial no. 14/091,795 (Atty Dckt No. 911-019.009-2//F-B&G-X0005), filed 27 November 2013, entitled "3D sensorless conversion method and apparatus," which claims benefit to U.S. provisional application no. 61/771,375, filed 1 March 2013, now abandoned;

[4] U.S. application serial no. 14/187,817 (Atty Dckt No. 911-019.010-2//F-B&G-X0008), filed 24 February 2014, entitled "A Mixed Theoretical And Discrete Sensorless Converter For Pump Differential Pressure And Flow Monitoring," which claims benefit to U.S. provisional application no. 61/803,258, filed 19 March 2013, now abandoned;

[5] U.S. application serial no. 14/339,594 (Atty Dckt No. 911-019.012-2//F-B&G-X0010US01), filed 24 July 2014, entitled "Sensorless Adaptive Pump Control with Self-Calibration Apparatus for Hydronic Pumping System," which claims benefit to U.S. provisional application serial no. 14/339,594 (Atty Dckt No. 911-019.012-1//F-B&G-X0010US01), filed 24 July 2014, now abandoned;

[6] U.S. application serial no. 14/680,667 (Atty Dckt No. 911-019.014-2//F-B&G-X0012US01), filed 7 April 2015, entitled " A Best-fit affinity sensorless conversion means for pump differential pressure and flow monitoring," which claims benefit to provisional patent application serial no. 61/976,749 (Atty Dckt No. 911-019.014-1//F-B&G-X0012US01), filed 8 April 2014, now abandoned; and

[7] U.S. application serial no. 14/730,871 (Atty Dckt No. 911-019.015-2//F-B&G-X0013US01), filed 4 June 2015, entitled "System and flow adaptive sensorless pumping control apparatus energy saving pumping applications," which claims benefit to provisional patent application serial no. 62/007,474 (Atty Dckt No. 911-019.015-1//F-B&G-X0013US01), filed 4 June 2014, now abandoned;

which are all assigned to the assignee of the instant patent application.

The Scope of the Invention

It should be understood that, unless stated otherwise herein, any of the features, characteristics, alternatives or modifications described regarding a particular embodiment herein may also be applied, used, or incorporated with any other embodiment described herein. Also, the drawing herein is not drawn to scale.

The scope of the present invention is defined by the following claims.

**Claims**

1. Apparatus (10) comprising:
   a signal processor or processing module (10a) being configured at least to:

   > receive signaling containing information about a sensed differential pressure (dP) across a valve (28) in an open position and system characteristics calibration data plotted as a discrete distribution function of a valve flow rate with respect to a differential pressure across the valve at a given open position; and
   > determine corresponding signaling containing information to open and close the valve and control a discrete valve flow rate (Q) of the valve (28), based upon the signaling received and wherein the signal processor or processing module (10a) is configured in, or forms part of, a 3-dimensional (3D) discrete valve flow rate converter (24) that responds to associated signaling containing information about both a given sensed differential pressure (dP) across the valve (28) and a given valve open position (d) of the valve (28), and provides the discrete valve flow rate (Q) by utilizing the discrete distribution function to reconstruct the discrete value flow rate (Q) in terms of the differential pressure (dP) and the given valve open position (d), based upon the system characteristic calibration data and numerical interpolations using the Equation:

   $$g(Q, \; dP, \; d) \; = \; 0,$$

   > where (g) is the discrete distribution function of the discrete valve flow rate (Q) with respect to the differential pressure (dP) across the valve (28) with the given open position (d).

2. Apparatus (10) according to claim 1, wherein the signal processor or processing module (10a) is configured to provide the corresponding signaling.

3. Apparatus (10) according to claim 2, wherein the corresponding signaling is used as control signaling in a pumping hydronic control system in a dynamic hydronic pumping system.

4. Apparatus (10) according to claim 1, wherein the apparatus (10) comprises a differential pressure sensor (26) configured across the valve (28), where the signaling contains information about the differential pressure (dP) provided or generated from or by the differential pressure sensor (26).

5. Apparatus (10) according to claim 1, wherein the apparatus (10) is, or forms part of, a valve flow rate measurement system (20).

6. Apparatus (10) according to claim 1, wherein the apparatus (10) comprises a mobile CPU device (22) having a discrete valve flow rate converter (24) configured to provide the discrete value flow rate (Q) at a given open position (d), based upon the differential pressure (dP) measured by a differential pressure sensor (26) across the valve (28).

7. Apparatus (10) according to claim 6, wherein the discrete valve flow rate converter (24) is configured to utilize the discrete distribution function to reconstruct the discrete value system flow rate (Q) in terms of the differential pressure (dP) and the given open position (d), based upon the system characteristic calibration data and numerical interpolations as the Equation:

   $$g(Q, \; dP, \; d) \; = \; 0,$$

   where (g) is the discrete distribution function of the discrete valve flow rate (Q) with respect to the differential pressure (dP) across the valve (28) with the given open position (d).

8. Apparatus (10) according to claim 7, wherein the discrete valve flow rate converter (24) comprises a memory device configured to store the system characteristic calibration data for the valve (28) to be monitored that is previously obtained.

9. Apparatus (10) according to claim 1, wherein the signal processor or processing module (10a) is configured to remap or reconstruct the discrete valve flow rate (Q) using the numerical interpolations by implementing a 3D numerical remapping algorithm, which may include, or take the form of, 2D interpolation or 2D Splines.

10. Apparatus (10) according to claim 1, wherein the apparatus (10) comprises an automatic control valve in which the given valve open position (d) can be controlled automatically, including where the signal processor or processing module (10a) is configured to provide automatic valve control signaling to control the given valve open position (d).

11. A method **characterized by**:

receiving with a signal processor or processing module (10a) signaling containing information about a sensed differential pressure (dP) across a valve (28) in an open position (d) and system characteristics calibration data plotted as a discrete distribution function of a valve flow rate with respect to a differential pressure across the valve at a given open position; and
determining with the signal processor or processing module (10a) corresponding signaling containing information to open and close the valve and control a discrete valve flow rate (Q) of the valve (28), based upon the signaling received and
wherein the method comprises configuring the signal processor or processing module (10a) in a 3-dimensional (3D) discrete valve flow rate converter (20) that responds to a sensed differential pressure (dP) and a given valve open position (d), and provides the discrete valve flow rate (Q), by utilizing the discrete distribution function to reconstruct the discrete value flow rate (Q) in terms of the differential pressure (dP) and the given valve open position (d), based upon the system characteristic calibration data and numerical interpolations using the Equation:

$$g(Q, \ dP, \ d) = 0,$$

where g is the discrete distribution function of the discrete valve flow rate (Q) with respect to the differential pressure (dP) across the valve (28) with the given open position (d).

12. A method according to claim 11, wherein the method comprises providing from the signal processor or processing module (10a) the corresponding signaling).

13. A method according to claim 11, wherein the method comprises using the corresponding signaling as control signaling in a pumping hydronic control system in a dynamic hydronic pumping system.

14. Method according to claim 11, wherein the method comprises configuring the signal processor or processing module (10a) to remap or reconstruct the discrete valve flow rate (Q) using the numerical interpolations by implementing a 3D numerical remapping algorithm, which may include, or take the form of, 2D interpolation or 2D Splines.

**Patentansprüche**

1. Vorrichtung (10), umfassend:

ein Signalprozessor- oder -verarbeitungsmodul (10a), das mindestens dafür konfiguriert ist,
eine Signalisierung zu empfangen, die Informationen über einen erfassten Differenzdruck (dP) über ein Ventil (28) in einer Öffnungsstellung und Systemeigenschaften-Kalibrierungsdaten enthält, die als eine diskrete Verteilungsfunktion einer Ventildurchflussmenge bezogen auf einen Differenzdruck über das Ventil in einer gegebenen Öffnungsstellung aufgetragen sind; und
eine entsprechende Signalisierung zu ermitteln, die Informationen enthält, um das Ventil zu öffnen und zu schließen und eine diskrete Ventildurchflussmenge (Q) des Ventils (28) basierend auf der empfangenen Signalisierung zu steuern, und wobei das Signalprozessor- oder -verarbeitungsmodul (10a) in einem dreidimensionalen (3D) Wandler (24) für die diskrete Ventildurchflussmenge konfiguriert ist oder einen Teil desselben bildet, der auf eine zugehörige Signalisierung anspricht, die Informationen sowohl über einen gegebenen erfassten Differenzdruck (dP) über das Ventil (28) und eine gegebene Ventilöffnungsstellung (d) des Ventils (28) enthält und die diskrete Ventildurchflussmenge (Q) durch Verwendung der diskreten Verteilungsfunktion bereitstellt, um den diskreten Durchflussmengenwert (Q) hinsichtlich des Differenzdrucks (dP) und der gegebenen Ventilöffnungsstellung (d) zu rekonstruieren, basierend auf den Systemeigenschaft-Kalibrierungsdaten und numerischen Interpolationen unter Verwendung der Gleichung:

$$g(Q, \ dP, \ d) = 0,$$

worin (g) die diskrete Verteilungsfunktion der diskreten Ventildurchflussmenge (Q) bezogen auf den Differenzdruck (dP) über das Ventil (28) mit der gegebenen Öffnungsstellung (d) ist.

2. Vorrichtung (10) nach Anspruch 1, wobei das Signalprozessor- oder -verarbeitungsmodul (10a) dafür konfiguriert ist, die entsprechende Signalisierung bereitzustellen.

3. Vorrichtung (10) nach Anspruch 2, wobei die entsprechende Signalisierung als Steuerungssignalisierung in einem Pumpen-Hydronik-Steuerungssystem in einem dynamischen hydronischen Pumpsystem verwendet wird.

4. Vorrichtung (10) nach Anspruch 1, wobei die Vorrichtung (10) einen Differenzdrucksensor (26) umfasst, der über das Ventil (28) konfiguriert ist, wobei die Signalisierung Informationen über den Differenzdruck (dP) enthält, die von dem Differenzdrucksensor (26) bereitgestellt oder von diesem erzeugt werden.

5. Vorrichtung (10) nach Anspruch 1, wobei die Vorrichtung (10) ein Ventildurchflussmengen-Messsystem (20) ist oder einen Teil desselben bildet.

6. Vorrichtung (10) nach Anspruch 1, wobei die Vorrichtung (10) eine mobile CPU-Einrichtung (22) umfasst, die einen Wandler (24) für die diskrete Ventildurchflussmenge hat, der dafür konfiguriert ist, die diskrete Ventildurchflussmenge (Q) bei einer gegebenen Öffnungsstellung (d) auf der Grundlage des von einem Differenzdrucksensor (26) über das Ventil (28) gemessenen Differenzdrucks (dP) bereitzustellen.

7. Vorrichtung (10) nach Anspruch 6, wobei der Wandler (24) für die diskrete Ventildurchflussmenge dafür konfiguriert ist, die diskrete Verteilungsfunktion zum Rekonstruieren des diskreten Systemdurchflussmengenwerts (Q) hinsichtlich des Differenzdrucks (dP) und der gegebenen Öffnungsstellung (d) basierend auf den Systemeigenschaft-Kalibrierungsdaten und numerischen Interpolationen als Gleichung

$$g(Q, dP, d) = 0,$$

zu verwenden,
worin (g) die diskrete Verteilungsfunktion der diskreten Ventildurchflussmenge (Q) bezogen auf den Differenzdruck (dP) über das Ventil (28) mit der gegebenen Öffnungsstellung (d) ist.

8. Vorrichtung (10) nach Anspruch 7, wobei der Wandler (24) für die diskrete Ventildurchflussmenge eine Speichereinrichtung umfasst, die dafür konfiguriert ist, die Systemeigenschaft-Kalibrierungsdaten für das zu überwachende Ventil (28) speichern, die zuvor erhalten wurden.

9. Vorrichtung (10) nach Anspruch 1, wobei das Signalprozessor- oder -verarbeitungsmodul (10a) dafür konfiguriert ist, die diskrete Ventildurchflussmenge (Q) unter Verwendung der numerischen Interpolationen neu abzubilden oder zu rekonstruieren, und zwar durch Implementierung eines numerischen 3D-Neuabbildungsalgorithmus, der 2D-Interpolation oder 2D-Splines enthalten kann oder deren Form annehmen kann.

10. Vorrichtung (10) nach Anspruch 1, wobei die Vorrichtung (10) ein automatisches Steuerventil umfasst, bei dem die gegebene Ventilöffnungsstellung (d) automatisch gesteuert werden kann, einschließlich des Falls, in welchem das Signalprozessor- oder -verarbeitungsmodul (10a) dafür konfiguriert ist, eine automatische Ventilsteuersignalisierung bereitzustellen, um die gegebene Ventilöffnungsstellung (d) zu steuern.

11. Verfahren, **gekennzeichnet durch**:

Empfangen einer Signalisierung mit einem Signalprozessoroder -verarbeitungsmodul (10a), die Informationen über einen erfassten Differenzdruck (dP) über ein Ventil (28) in einer Öffnungsstellung (d) und Systemeigenschaften-Kalibrierungsdaten enthält, die als eine diskrete Verteilungsfunktion einer Ventildurchflussmenge bezogen auf einen Differenzdruck über das Ventil bei einer gegebenen Öffnungsstellung aufgetragen sind; und
Ermitteln einer entsprechenden Signalisierung mit dem Signalprozessor- oder -verarbeitungsmodul (10a), die Informationen enthält, um das Ventil zu öffnen und zu schließen und eine diskrete Ventildurchflussmenge (Q) des Ventils (28) basierend auf der empfangenen Signalisierung zu steuern, und wobei das Verfahren das Konfigurieren des Signalprozessor- oder -verarbeitungsmoduls (10a) in einem dreidimensionalen (3D) Wandler (24) für eine diskrete Ventildurchflussmenge umfasst, der auf einen erfassten Differenzdruck (dP) und eine gegebene Ventilöffnungsstellung (d) anspricht und die diskrete Ventildurchflussmenge (Q) durch Verwendung der diskreten Verteilungsfunktion bereitstellt, um den diskreten Durchflussmengenwert (Q) hinsichtlich des Differenzdrucks (dP) und der gegebenen Ventilöffnungsstellung (d) zu rekonstruieren, basierend auf den Systemeigenschaft-Kalibrierungsdaten und numerischen Interpolationen unter Verwendung der Gleichung:

$$g(Q, dP, d) = 0,$$

worin (g) die diskrete Verteilungsfunktion der diskreten Ventildurchflussmenge (Q) bezogen auf den Differenzdruck (dP) über das Ventil (28) mit der gegebenen Öffnungsstellung (d) ist.

12. Verfahren nach Anspruch 11, wobei das Verfahren das Bereitstellen der entsprechenden Signalisierung von dem Signalprozessor- oder -verarbeitungsmodul (10a) umfasst.

13. Verfahren nach Anspruch 11, wobei das Verfahren die Verwendung der entsprechenden Signalisierung als Steuerungssignalisierung in einem Pumpen-Hydronik-Steuerungssystem in einem dynamischen hydronischen Pumpsystem umfasst.

14. Verfahren nach Anspruch 11, wobei das Verfahren das Konfigurieren des Signalprozessor- oder -verarbeitungsmoduls (10a) umfasst, um die diskrete Ventildurchflussmenge (Q) unter Verwendung der numerischen Interpolationen neu abzubilden oder zu rekonstruieren, und zwar durch Implementierung eines numerischen 3D-Neuabbildungsalgorithmus, der 2D-Interpolation oder 2D-Splines enthalten kann oder deren Form annehmen kann.

## Revendications

1. Appareil (10) comprenant:
   un processeur de signal ou un module de traitement (10a) configuré au moins pour:

   recevoir une signalisation contenant des informations sur une pression différentielle détectée (dP) dans une vanne (28) dans une position ouverte et des données d'étalonnage des caractéristiques du système tracées comme une fonction de distribution discrète d'un débit de vanne par rapport à une pression différentielle dans la vanne à une position ouverte donnée; et déterminer une signalisation correspondante contenant des informations pour ouvrir et fermer la vanne et commander un débit de vanne discret (Q) de la vanne (28), sur la base de la signalisation reçue et dans lequel le processeur de signal ou le module de traitement (10a) est configuré dans, ou fait partie d'un convertisseur de débit de vanne discret en 3 dimensions (3D) (24) qui répond à une signalisation associée contenant des informations concernant à la fois une pression différentielle détectée donnée (dP) dans la vanne (28) et
   une position ouverte de vanne donnée (d) de la vanne (28), et fournit le débit de vanne discret (Q) en utilisant la fonction de distribution discrète pour reconstruire le débit de vanne discret (Q) en termes de pression différentielle (dP) et de position ouverte de vanne donnée (d), sur la base des données d'étalonnage des caractéristiques du système et des interpolations numériques utilisant l'équation:

   $$g(Q, \ dP, \ d) \ = \ 0,$$

   où (g) est la fonction de distribution discrète du débit de vanne discret (Q) par rapport à la pression différentielle (dP) dans la vanne (28) avec la position ouverte donnée (d).

2. Appareil (10) selon la revendication 1, dans lequel le processeur de signal ou le module de traitement (10a) est configuré pour fournir la signalisation correspondante.

3. Appareil (10) selon la revendication 2, dans lequel la signalisation correspondante est utilisée comme signalisation de commande dans un système de commande de pompage hydronique dans un système de pompage hydronique dynamique.

4. Appareil (10) selon la revendication 1, dans lequel l'appareil (10) comprend un capteur de pression différentielle (26) configuré dans la vanne (28), dans lequel la signalisation contient des informations sur la pression différentielle (dP) fournie ou générée à partir du capteur de pression différentielle (26) ou par celuici.

5. Appareil (10) selon la revendication 1, dans lequel l'appareil (10) est, ou fait partie d'un système de mesure de débit de vanne (20).

6. Appareil (10) selon la revendication 1, dans lequel l'appareil (10) comprend un dispositif UC mobile (22) ayant un convertisseur de débit de vanne discret (24) configurée pour fournir le débit de vanne discret (Q) à une position ouverte donnée (d), sur la base de la pression différentielle (dP) mesurée par un capteur de pression différentielle (26) dans la vanne (28).

7. Appareil (10) selon la revendication 6, dans lequel le convertisseur de débit de vanne discret (24) est configuré pour utiliser la fonction de distribution discrète pour reconstruire le débit du système de vanne discret (Q) en termes de pression différentielle (dP) et de position ouverte donnée (d), sur la base des données d'étalonnage des caractéristiques du système et des interpolations numériques comme l'équation:

   $$g \ (Q, \ dP, \ d) \ = \ 0,$$

   où (g) est la fonction de distribution discrète du débit de vanne discret (Q) par rapport à la pression différentielle (dP) dans la vanne (28) avec la position ouverte donnée (d).

8. Appareil (10) selon la revendication 7, dans lequel le convertisseur de débit de vanne discret (24) comprend un dispositif de mémoire configuré pour stocker les données d'étalonnage des caractéristiques du système pour la vanne (28) à surveiller, obtenues précédemment.

9. Appareil (10) selon la revendication 1, dans lequel le processeur de signal ou le module de traitement (10a) est configuré pour remapper ou reconstruire le débit de vanne discret (Q) en utilisant les interpolations numériques en mettant en œuvre un algorithme de remappage numérique 3D, qui peut inclure, ou prendre la forme, d'une interpolation 2D ou de courbes brisées 2D.

10. Appareil (10) selon la revendication 1, dans lequel l'appareil (10) comprend une vanne de commande automatique dans laquelle la position ouverte de vanne donnée (d) peut être commandée automatiquement, y compris lorsque le processeur de signal ou le module de traitement (10a) est configuré pour fournir une signalisation de commande de vanne automatique pour commander la position ouverte de vanne donnée (d).

11. Procédé **caractérisé par**:

   la réception avec un processeur de signal ou un module de traitement (10a) la signalisation contenant des informations sur une pression différentielle détectée (dP) dans une vanne (28) dans une position ouverte (d) et des données d'étalonnage des caractéristiques du système tracées comme une fonction de distribution discrète d'un débit de vanne par rapport à une pression différentielle dans la vanne à une position ouverte donnée; et
   la détermination avec le processeur de signal ou le module de traitement (10a) d'une signalisation correspondante contenant des informations pour ouvrir et fermer la vanne et commander un débit de vanne discret (Q) de la vanne (28), sur la base de la signalisation reçue et dans lequel le procédé comprend la configuration du processeur de signal ou du module de traitement (10a) en un convertisseur de débit de vanne discret en 3 dimensions (3D) (20) qui répond à une pression différentielle détectée (dP) et à une position ouverte de vanne donnée (d), et fournit le débit de vanne discret (Q), en utilisant la fonction de distribution discrète pour reconstruire le débit de vanne discret (Q) en termes de pression différentielle (dP) et de position ouverte de soupape donnée (d), sur la base des données d'étalonnage des caractéristiques du système et des interpolations numériques utilisant l'équation:

$$g(Q, \ dP, \ d) \ = \ 0,$$

   où g est la fonction de distribution discrète du débit de vanne discret (Q) par rapport à la pression différentielle (dP) dans la vanne (28) avec la position ouverte donnée (d).

12. Procédé selon la revendication 11, dans lequel le procédé comprend la fourniture de la signalisation correspondante par le processeur de signal ou le module de traitement (10a) .

13. Procédé selon la revendication 11, dans lequel le procédé comprend l'utilisation de la signalisation correspondante comme signalisation de commande dans un système de commande de pompage hydronique dans un système de pompage hydronique dynamique.

14. Procédé selon la revendication 11, dans lequel le procédé comprend la configuration du processeur de signal ou du module de traitement (10a) pour remapper ou reconstruire le débit de vanne discret (Q) en utilisant les interpolations numériques en mettant en œuvre un algorithme de remappage numérique 3D, qui peut inclure, ou prendre la forme, d'une interpolation 2D ou de courbes brisées 2D.

**Discrete Valve Flow Rate Conversion**

20

26

22

Flow (in)

Flow (out)

28

**Figure 1.** Valve flow rate measurement system with a 3D valve flow rate converter.

24

dP

3D Discrete Valve Flow Rate Converter

d

Q

**Figure 2.** A 3D discrete valve flow rate converter for a valve flow rate Q with a given valve open position d and across a valve differential pressure dP.

**Figure 3.** The distribution of valve system characteristics.

Fig. 4A

Fig. 4B

Fig. 4C

Fig. 4D

**Figure 4.** Comparison of testing results using the discrete valve flow rate converter (squares) and the corresponding flow meter readings (circles) on a circuit setter respectively.

Apparatus 10

Signal processor or processing module 10a configured at least to:

receive signaling containing information about differential pressure sensed across a valve in an open position and system characteristics calibration data plotted as a discrete distribution function;

determine corresponding signaling containing information about a discrete valve flow rate of the valve, based upon the signaling received; and/or

provide corresponding signaling containing information about the discrete valve flow rate.

Other signal processor circuits or components 10b that do not form part of the underlying invention, e.g., including input/output modules, one or more memory modules, data, address and control busing architecture, etc.

Figure 5: Implementation of Signal Processing Functionality

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62091965
- US 98228610
- US 8700221 B
- US 71708612
- US 61576737
- EP 0540079 A1
- US 4277832 A
- US 09179513
- US 61771375
- US 18781714
- US 61803258
- US 33959414
- US 68066715
- US 61976749 B
- US 73087115
- US 62007474 B